# EUROPEAN PATENT SPECIFICATION

(11) **EP 3 573 255 B1**
(45) Date of publication and mention of the grant of the patent: **06.04.2022**
(21) Application number: 19176777.1
(22) Date of filing: 27.05.2019
(51) Int. Cl.: H04B 7/15

(54) **REPEATER AND OPERATING METHOD OF THE REPEATER**
REPEATER UND METHODE ZUM BETREIBEN EINES REPEATERS
RÉPÉTETEUR ET SON PROCÉDÉ

(30) Priority: 25.05.2018 KR 20180059902
(43) Date of publication of application: 27.11.2019
(73) Proprietor: Solid, Inc., Gyeonggi-do 463-400 (KR)
(72) Inventor: KIM, Hyunchae, Gyeonggi-do (KR); HONG, Hoony, Gyeonggi-do (KR)
(74) Representative: Frenkel, Matthias Alexander

(56) References cited:
- KR-B1- 101 566 295
- US-A1- 2007 201 402

## Description

### CROSS-REFFERENCE TO RELATED APPLICATIONS

This application claims the benefits of Korean Patent Applications No. 10-2018-0059902, filed on May 25, 2018 and No. 10-2019-0061617, filed on May 27, 2019, in the Korean Intellectual Property Office.

### BACKGROUND

### 1. Field

The disclosure relates to a repeater and an operating method thereof, and more particularly, to a repeater capable of controlling uplink and downlink switching of the repeater for relaying a second communication signal according to a second mobile communication standard based on information about a start point of a first communication signal according to a first mobile communication standard, and an operating method thereof.

### 2. Description of the Related Art

5G new radio (NR) is a new radio access technology (RAT) developed by 3GPP for 5G mobile networks. The 5G NR aims to support new latency, reliability, and security at a low cost. The overall architecture of the 5G NR is designed to connect large-scale IoT devices and provide innovative services in a variety of areas such as healthcare, automobile, and public safety.

When a communication system operates in a time division duplex (TDD) mode of the 5G NR, it is required to determine switching timing of downlink communication and uplink communication. It takes a lot of resources to receive and demodulate a 5G NR signal to obtain information about a start point of the 5G NR signal.

US 2007/201402 A1 outlines a method and system for generating switching a timing signal for separating a transmitting and receiving signal in a RF repeater of a mobile telecommunication network by using a TDD scheme and an OFDM modulation scheme, which transmits a part of a RF signal extracted from a coupler of a RF repeater to a switching timing signal generating circuit when a RF signal transmitted from an Access Point (hereinafter, referred to as "AP") is transmitted to a RF repeater, locates a frame start position of a RF signal by correlating a reference signal generated in a switching timing signal generating circuit and a RF signal extracted from a coupler, and is capable of transmitting a RF signal by distinguishing between a downlink signal and a uplink signal by using a switching timing signal in a switch when calculating a starting point of a downlink signal and a uplink signal which is included in an RF signal by using an AP's frame standard on the basis of a frame starting location, and transmitting to a RF repeater's switch generating a switching timing signal by using it.

KR 101 566 295 B1 outlines a mobile communication relaying device that performs a TDD time switching.

### SUMMARY

Preferred embodiments of the present disclosure are defined in the appended claims.

### BRIEF DESCRIPTION OF THE DRAWINGS

These and/or other aspects will become apparent and more readily appreciated from the following description of the embodiments, taken in conjunction with the accompanying drawings in which:
FIG. 1 is a conceptual diagram of a communication system according to an embodiment;
FIG. 2 is a block diagram according to an embodiment of an uplink-downlink switching signal generator shown in FIG. 1;
FIG. 3 is an example of a parameter for determining time division duplex (TDD) switching pattern information of a mobile communication standard according to an embodiment;
FIG. 4 is a block diagram according to an embodiment of a repeater shown in FIG. 1;
FIG. 5 is a conceptual diagram of TDD switching according to a mobile communication standard according to an embodiment; and
FIG. 6 is a flowchart of an operating method of a repeater according to an embodiment.

### DETAILED DESCRIPTION

The inventive concept may be variously modified and have various example embodiments, so that specific example embodiments will be illustrated in the drawings and described in the detailed description. However, this does not limit the inventive concept to specific example embodiments, and it should be understood that the inventive concept covers all the modifications as covered by the appended claims.

In describing the inventive concept, in the following description, a detailed explanation of known related technologies may be omitted to avoid unnecessarily obscuring the subject matter of the inventive concept. In addition, numeral figures (for example, 1, 2, and the like) used during describing the specification are just identification symbols for distinguishing one element from another element.

Further, in the specification, if it is described that one component is "connected" or "accesses" the other component, it is understood that the one component may be directly connected to or may directly access the other component but unless explicitly described to the contrary, another component may be "connected" or "access" between the components.

In addition, terms including "unit", "er", "or", "module", and the like disclosed in the specification mean a unit that processes at least one function or operation and this may be implemented by hardware or software such as a processor, a micro processor, a micro controller, a central processing unit (CPU), a graphics processing unit (GPU), an accelerated Processing unit (APU), a digital signal processor (DSP), an application specific integrated circuit (ASIC), and a field programmable gate array (FPGA) or a combination of hardware and software. Furthermore, the terms may be implemented in a form coupled to a memory that stores data necessary for processing at least one function or operation.

Moreover, it is intended to clarify that components in the specification are distinguished in terms of primary functions of the components. That is, two or more components to be described below may be provided to be combined to one component or one component may be provided to be divided into two or more components for each more subdivided function. In addition, each of the respective components to be described below may additionally perform some or all functions among functions which other components take charge of in addition to a primary function which each component takes charge of and some functions among the primary functions which the respective components take charge of are exclusively charged by other components to be performed, of course.

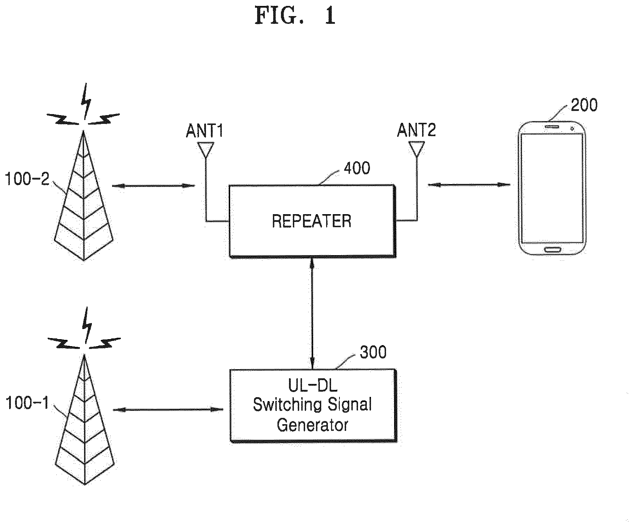

FIG. 1 is a conceptual diagram of a communication system according to an embodiment.

Referring to FIG. 1, the communication system according to an embodiment may include a first base station 100-1, a second base station 100-2, a mobile communication terminal 200, an uplink-downlink switching signal generator 300, and a repeater 400.

The first base station 100-1 and the second base station 100-2 may provide communication services according to different mobile communication standards.

According to an embodiment, the first base station 100-1 may provide a communication service according to a previous communication standard (e.g., an LTE standard or an LTE-A standard) and the second base station 100-2 may provide a communication service according to the latest communication standard (E.g., a 5G standard).

The uplink-downlink switching signal generator 300 receives a first communication signal according to a first mobile communication standard transmitted from the first base station 100-1. The uplink-downlink switching signal generator 300 generates a time division duplex (TDD) switching signal based on information about a start point of the received first communication signal.

According to an embodiment, the uplink-downlink switching signal generator 300 may be included in the repeater 400 and may be implemented as a portion of the repeater 400.

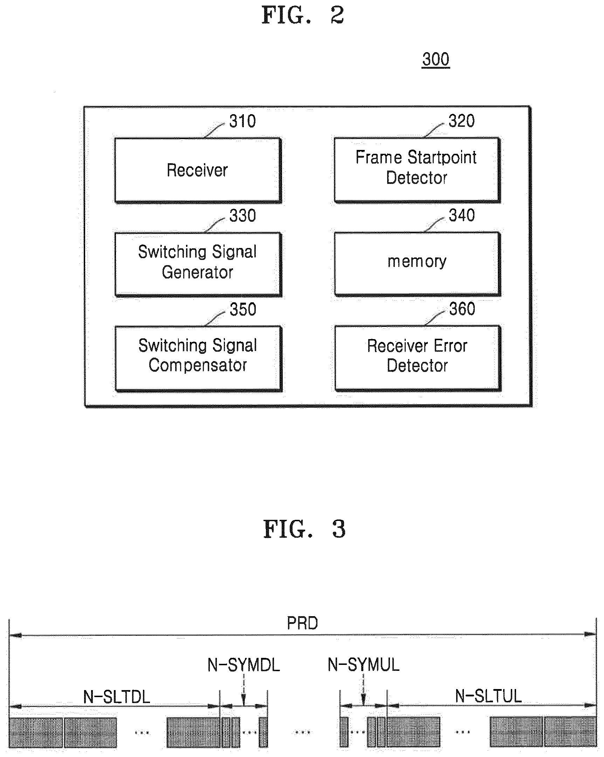

Detailed configuration and operation of the uplink-downlink switching signal generator 300 will be described later below with reference to FIG. 2.

The repeater 400 may relay communication between the second base station 100-2 and the mobile communication terminal 200. The repeater 400 may receive a downlink signal transmitted from the second base station 100-2 via a first antenna ANT1 and relay the received downlink signal to the mobile communication terminal 200 through the second antenna ANT2. The repeater 400 may receive an uplink signal transmitted from the mobile communication terminal 200 via the second antenna ANT2 and relay the received uplink signal to the second base station 100-2 through the first antenna ANT1.

The first antenna ANT1 may be referred to as a donor antenna and the second antenna ANT2 may be referred to as a service antenna or a coverage antenna, but are not limited thereto.

According to an embodiment, the first antenna ANT1 of the repeater 400 may be replaced with a wired cable connected to the second base station 100-2.

Detailed configuration and operation of the repeater 400 will be described later below with reference to FIG. 3

FIG. 2 is a block diagram according to an embodiment of the uplink-downlink switching signal generator 300 shown in FIG. 1. FIG. 3 is an example of a parameter for determining TDD switching pattern information of a mobile communication standard according to an embodiment.

Referring to FIGS. 1 and 2, the uplink-downlink switching signal generator 300 may include a receiver 310, a frame start point detector 320, a switching signal generator 330, a memory 340, a switching signal compensator 350, and a receiver error detector 360.

The receiver 310 receives a first communication signal according to the first mobile communication standard transmitted from the first base station 100-1.

According to an embodiment, the receiver 310 may include a configuration for receiving the first communication signal according to the first mobile communication standard and processing the first communication signal into a form that can be processed in the uplink-downlink switching signal generator 300, such as a modem.

The frame start point detector 320 detects a frame start point of the first communication signal according to the first mobile communication standard received via the receiver 310.

According to an embodiment, the frame start point detector 320 may use a preamble of the first communication signal to obtain information about the frame start point, that is, a start point of the first communication signal.

According to another embodiment, the frame start point detector 320 may extract a synchronization signal included in the first communication signal and use the extracted synchronization signal to obtain information about the frame start point, that is, the start point of the first communication signal.

The switching signal generator 330 generates a TDD switching signal based on the information about the start point of the first communication signal detected by the frame start point detector 320.

According to an embodiment, the TDD switching signal is a signal for controlling uplink and downlink switching of the repeater 400 that relays a second communication signal according to the second mobile communication standard.

According to an embodiment, the switching signal generator 330 may generate the TDD switching signal based on the information about the start point of the first communication signal and the TDD switching pattern information of the second communication signal.

According to an embodiment, the switching of the uplink and downlink of the repeater 400 that relays the second communication signal may be periodically repeated, and the TDD switching pattern information may broadly mean information about a pattern in which downlink slots, downlink symbols, uplink slots, and uplink symbols within one period are allocated.

Referring to FIG. 3, the TDD switching pattern information may be determined based on at least one of one period of a downlink-uplink pattern PRD, the number of consecutive downlink slots N-SLTDL, the number of consecutive downlink symbols from the last downlink slot N-SYMDL, the number of consecutive uplink slots from the end of the downlink-uplink pattern N-SLTUL, and the number of consecutive uplink symbols from the first uplink slot N-SYMUL.

According to an embodiment, the TDD switching pattern information may be included in the first communication signal transmitted from the first base station 100-1 and received via the receiver 310.

According to another embodiment, the TDD switching pattern information may be received from a remote server (not shown) connected to the first base station 100-1.

Referring again to FIG. 2, the memory 340 may store data necessary for operation of each configuration in the uplink-downlink switching signal generator 300 and data generated in the process.

The switching signal compensator 350 may compensate a time delay value for the information about the start point of the first communication signal detected by the frame start point detector 320 and transmit the compensated information about the start point of the first communication signal to the switching signal generator 330. In this case, the switching signal generator 330 may generate the TDD switching signal based on the information about the start point of the first communication signal in which the time delay value is compensated.

According to an embodiment, the time delay value used in the switching signal compensator 350 may be stored in the memory 340 as a preset value.

According to another embodiment, the time delay value used in the switching signal compensator 350 may be a value obtained by measuring a delay value generated in the repeater 400.

The receiver error detector 360 may detect whether or not an error has occurred in reception of the first communication signal of the receiver 310.

According to an embodiment, the receiver error detector 360 may determine that an error has occurred when the first communication signal at the receiver 310 is not received within a certain period of time.

According to another embodiment, the receiver error detector 360 may determine that an error has occurred when the information about the start point of the first communication signal is not obtained from the first communication signal by the frame start point detector 320.

The receiver error detector 360 may transmit information about the occurrence of an error to the switching signal generator 330. In this case, the switching signal generator 330 may maintain the existing TDD switching signal without generating a new TDD switching signal. According to an embodiment, the existing TDD switching signal may be stored in the memory 340.

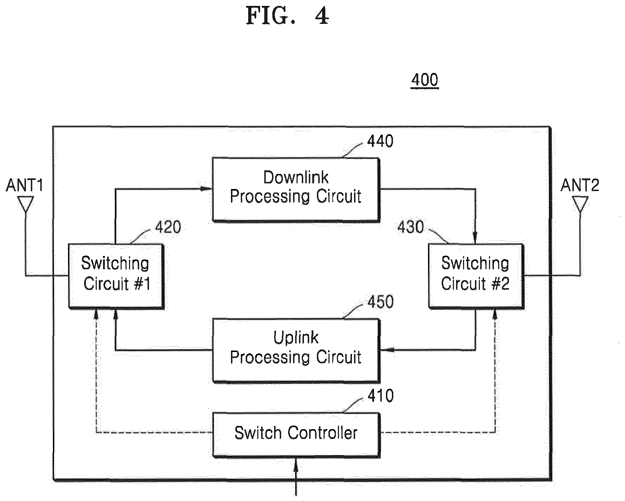

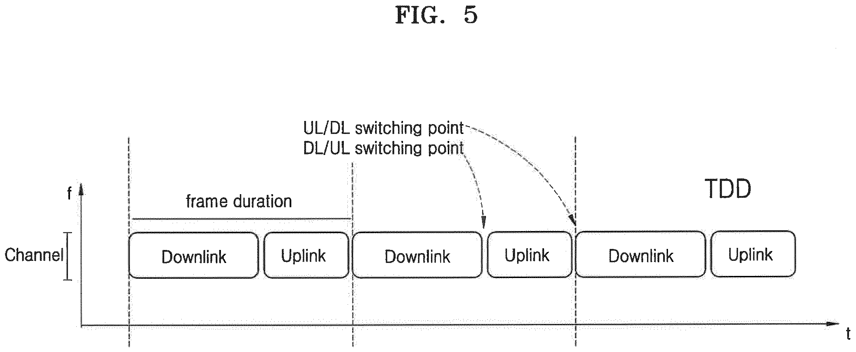

FIG. 4 is a block diagram according to an embodiment of the repeater shown in FIG. 1. FIG. 5 is a conceptual diagram of TDD switching according to a mobile communication standard according to an embodiment.

Referring to FIGS. 1 and 4, the repeater 400 may include a switch controller 410, a first switching circuit 420, a second switching circuit 430, a downlink processing circuit 440, and an uplink processing circuit 450.

The switch controller 410 may receive the TDD switching signal generated by the uplink-downlink switching signal generator 300 and may generate the first switching circuit 420 and the second switching circuit 430 based on the received TDD switching signal.

According to an embodiment, when the TDD switching signal is a signal for switching from an uplink to a downlink, the switch controller 410 may connect the first switching circuit 420 and the second switching circuit 430 to the uplink processing circuit 450.

According to another embodiment, when the TDD switching signal is a signal for switching from the downlink to the uplink, the switch controller 410 may connect the first switching circuit 420 and the second switching circuit 430 to the downlink processing circuit 440.

The first switching circuit 420 may selectively connect the first antenna ANT1 to the downlink processing circuit 440 or the first antenna ANT1 to the uplink processing circuit 450 according to the TDD switching.

The second switching circuit 430 may selectively connect the second antenna ANT2 to the downlink processing circuit 440 or the second antenna ANT2 to the uplink processing circuit 450 according to the TDD switching operation.

The downlink processing circuit 440 may process the first communication signal received through the first antenna ANT1 in downlink communication and transmit the processed first communication signal to the second antenna ANT2.

According to an embodiment, the downlink processing circuit 440 may include at least one of a low noise amplifier, an attenuator, a filter, and a high power amplifier.

The uplink processing circuit 450 may process the first communication signal received through the second antenna ANT2 in uplink communication and transmit the processed first communication signal to the first antenna ANT1.

According to an embodiment, the uplink processing circuit 450 may include at least one of a low noise amplifier, an attenuator, a filter, and a high power amplifier.

Referring to FIG. 5, the repeater 400 may relay the second communication signal transmitted according to the second mobile communication standard and may repeatedly switch a downlink and an uplink within frame duration of the second communication signal.

According to an embodiment, a downlink-uplink (DL/UL) switching point that is switched from a downlink to an uplink and an uplink-downlink (UL/DL) switching point that is switched from an uplink to a downlink may be determined by the TDD switching signal transmitted from the uplink-downlink switching signal generator 300.

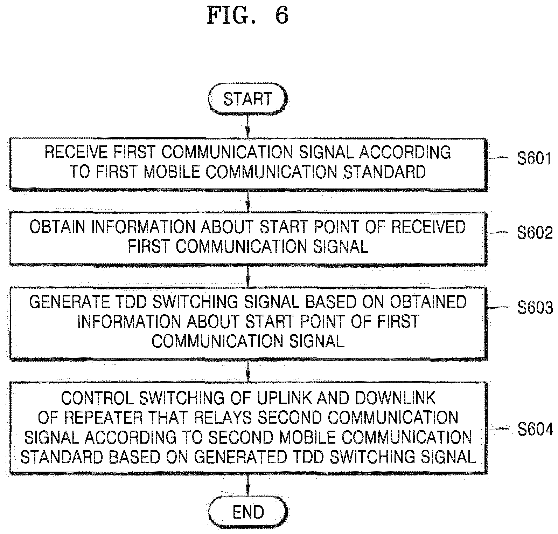

FIG. 6 is a flowchart of an operating method of a repeater according to an embodiment.

Referring to FIGS. 1 to 6, in operation S601, the uplink-downlink switching signal generator 300 may receive the first communication signal according to the first mobile communication standard.

In operation S602, the uplink-downlink switching signal generator 300 may obtain information about the start point of the received first communication signal.

In operation S603, the uplink-downlink switching signal generator 300 may generate a TDD switching signal based on the obtained information about the start point of the first communication signal.

According to an embodiment, the uplink-downlink switching signal generator 300 may generate the TDD switching signal based on the obtained information about the start point of the first communication signal and the TDD switching pattern information of the second communication signal according to the second mobile communication standard.

Referring to FIG. 3, the TDD switching pattern information may be determined based on at least one of one period of the downlink-uplink pattern PRD, the number of consecutive downlink slots N-SLTDL, the number of consecutive downlink symbols from the last downlink slot N-SYMDL, the number of consecutive uplink slots from the end of the downlink-uplink pattern N-SLTUL, and the number of consecutive uplink symbols from the first uplink slot N-SYMUL.

In operation S604, the repeater 400 may control switching of an uplink and a downlink of the repeater that relays the second communication signal according to the second mobile communication standard based on the generated TDD switching signal.

According to an embodiment, the first base station 100-1 may provide a communication service according to a previous communication standard (e.g., the LTE standard or the LTE-A standard) and the second base station 100-2 may provide a communication service according to the latest communication standard (E.g., the 5G standard).

While the disclosure has been particularly shown and described with reference to embodiments thereof, it will be understood that various changes in form and details may be made therein without departing from the scope of the following claims.

## Claims

1. An operating method of a repeater, the operating method comprising:
receiving a first communication signal according to a first mobile communication standard;
obtaining information about a frame start point of the first communication signal from the received first communication signal;
generating a time division duplex, TDD, switching signal based on information about the frame start point of the received first communication signal; and
controlling switching of an uplink and a downlink of the repeater that relays a second communication signal according to a second mobile communication standard based on the generated TDD switching signal,
wherein the first mobile communication standard is an LTE standard or an LTE-A standard, and the second mobile communication standard is a 5G standard.

2. The operating method of claim 1, wherein the obtaining of the information about the frame start point of the first communication signal comprises:
obtaining the information about the frame start point by using a preamble of the first communication signal or extracting a synchronization signal included in the first communication signal to obtain the information about the frame start point.

3. The operating method of claim 1, wherein the generating of the TDD switching signal comprises:
generating the TDD switching signal based on the information about the frame start point of the received first communication signal and TDD switching pattern information of the second communication signal,
wherein the TDD switching pattern information is information about a pattern in which downlink slots, downlink symbols, uplink slots, and uplink symbols within one period are allocated.

4. The operating method of claim 3, wherein the TDD switching pattern information is determined based on a period of a downlink-uplink pattern, the number of consecutive downlink slots, the number of consecutive downlink symbols from a last downlink slot, the number of consecutive uplink slots from the end of the downlink-uplink pattern, and the number of consecutive uplink symbols from a first uplink slot.

5. The operating method of claim 1, wherein the generating of the TDD switching signal comprises:
generating the TDD switching signal by compensating a preset time delay value for the information about the frame start point of the received first communication signal,
wherein the preset time delay value is a value obtained by measuring a delay value generated in the repeater.

6. The operating method of claim 1, further comprising:
determining whether or not an error has occurred in the reception of the first communication signal.

7. The operating method of claim 6, wherein the generating of the TDD switching signal comprises:
maintaining the TDD switching signal as the existing TDD switching signal when an error has occurred in the reception of the first communication signal.

8. A repeater (400) comprising:
a switching signal generator (300) configured to receive a first communication signal according to a first mobile communication standard ; to obtain information about a frame start point of the received first communication signal from the received first communication signal, and to generate a time division duplex, TDD, switching signal based on information about the frame start point of the received first communication signal; and
a switching circuit (410) configured to control uplink and downlink switching of the repeater that relays a second communication signal according to a second mobile communication standard based on the generated TDD switching signal,
wherein the first mobile communication standard is an LTE standard or an LTE-A standard, and the second mobile communication standard is a 5G standard.

## Patentansprüche

1. Betriebsverfahren eines Repeaters, wobei das Betriebsverfahren umfasst:
Empfangen eines ersten Kommunikationssignals gemäß einem ersten Mobilkommunikationsstandard;
Erhalten von Informationen über einen Rahmenstartpunkt des ersten Kommunikationssignals von dem empfangenen ersten Kommunikationssignal;
Erzeugen eines Zeitduplex, TDD, -Schaltsignals auf der Grundlage von Informationen über den Rahmenstartpunkt des empfangenen ersten Kommunikationssignals; und
Steuern des Schaltens eines Uplinks und Downlinks des Repeaters, der ein zweites Kommunikationssignal gemäß einem zweiten Mobilkommunikationsstandard basierend auf dem erzeugten TDD-Schaltsignal weiterleitet,
wobei der erste Mobilfunkstandard ein LTE-Standard oder ein LTE-A-Standard ist und der zweite Mobilfunkstandard ein 5G-Standard ist.

2. Betriebsverfahren nach Anspruch 1, wobei das Erhalten der Information über den Rahmenstartpunkt des ersten Kommunikationssignals umfasst:
Erhalten der Information über den Rahmenstartpunkt durch Verwenden einer Präambel des ersten Kommunikationssignals oder Extrahieren eines in dem ersten Kommunikationssignal enthaltenen Synchronisationssignals, um die Information über den Rahmenstartpunkt zu erhalten.

3. Betriebsverfahren nach Anspruch 1, wobei die Erzeugung des TDD-Schaltsignals umfasst:
Erzeugen des TDD-Schaltsignals auf der Grundlage der Informationen über den Rahmenstartpunkt des empfangenen ersten Kommunikationssignals und TDD-Schaltmusterinformationen des zweiten Kommunikationssignals,
wobei die TDD-Schaltmusterinformationen Informationen über ein Muster sind, in dem Downlink-Slots, Downlink-Symbole, Uplink-Slots und Uplink-Symbole innerhalb einer Periode zugewiesen werden.

4. Betriebsverfahren nach Anspruch 3, wobei die TDD-Schaltmusterinformationen auf der Grundlage einer Periode eines Downlink-Uplink-Musters, der Anzahl aufeinanderfolgender Downlink-Slots, der Anzahl aufeinanderfolgender Downlink-Symbole von einem letzten Downlink-Slot, der Anzahl aufeinanderfolgender Uplink-Slots von dem Ende des Downlink-Uplink-Musters und der Anzahl aufeinanderfolgender Uplink-Symbole von einem ersten Uplink-Slot bestimmt werden.

5. Betriebsverfahren nach Anspruch 1, wobei das Erzeugen des TDD-Schaltsignals umfasst:
Erzeugen des TDD-Schaltsignals durch Kompensieren eines voreingestellten Zeitverzögerungswertes für die Information über den Rahmenstartpunkt des empfangenen ersten Kommunikationssignals,
wobei der voreingestellte Zeitverzögerungswert ein Wert ist, der durch Messung eines in dem Repeater erzeugten Verzögerungswertes erhalten wird.

6. Betriebsverfahren nach Anspruch 1, das ferner umfasst:
Bestimmen, ob beim Empfang des ersten Kommunikationssignals ein Fehler aufgetreten ist oder nicht.

7. Betriebsverfahren nach Anspruch 6, wobei das Erzeugen des TDD-Schaltsignals umfasst:
Beibehalten des TDD-Schaltsignals als das bestehende TDD-Schaltsignal, wenn ein Fehler beim Empfang des ersten Kommunikationssignals aufgetreten ist.

8. Verstärker (400), aufweisend:
einen Schaltsignalgenerator (300), der konfiguriert ist, ein erstes Kommunikationssignal gemäß einem ersten Mobilkommunikationsstandard zu empfangen; um Informationen über einen Rahmenstartpunkt des empfangenen ersten Kommunikationssignals aus dem empfangenen ersten Kommunikationssignal zu erhalten und um ein Zeitduplex, TDD, -Schaltsignal basierend auf Informationen über den Rahmenstartpunkt des empfangenen ersten Kommunikationssignals zu erzeugen; und
einen Schaltkreis (410), der konfiguriert ist, das Uplink- und Downlink-Schalten des Repeaters zu steuern, der ein zweites Kommunikationssignal gemäß einem zweiten Mobilkommunikationsstandard auf der Grundlage des erzeugten TDD-Schaltsignals weiterleitet,
wobei der erste Mobilkommunikationsstandard ein LTE-Standard oder ein LTE-A-Standard ist und der zweite Mobilkommunikationsstandard ein 5G-Standard ist.

## Revendications

1. Procédé de fonctionnement d'un répétiteur, le procédé consistant à :
recevoir un premier signal de communication selon une première norme de communication mobile ;
obtenir des informations relatives à un point de départ de trame du premier signal de communication en provenance du premier signal de communication ;
générer un signal de commutation de duplexage par répartition dans le temps, TDD, en fonction des informations relatives au premier point de départ de trame du premier signal de communication reçu ; et
commander la commutation d'une liaison montante et d'une liaison descendante du répétiteur qui relaie un second signal de communication conformément à une seconde norme de communication mobile en fonction du signal de commutation de TDD généré,
dans lequel la première norme de communication mobile est une norme LTE ou une norme LTE-A, et la seconde norme de communication mobile est une norme 5G.

2. Procédé de fonctionnement selon la revendication 1, dans lequel l'obtention des informations relatives au point de départ de trame du premier signal de communication consiste à :
obtenir des informations relatives au point de départ de trame à l'aide d'un préambule du premier signal de communication ou extraire un signal de synchronisation inclus dans le premier signal de communication pour obtenir les informations relatives au premier point de départ de trame.

3. Procédé de fonctionnement selon la revendication 1, dans lequel la génération du signal de commutation de TDD consiste à :
générer le signal de commutation de TDD en fonction des informations relatives au point de départ de trame du premier signal de communication reçu et des informations de motif de commutation de TDD du second signal de communication,
dans lequel les informations de motif de commutation de TDD sont des informations relatives à un motif dans lequel des créneaux de liaison descendante, des symboles de liaison descendante, des créneaux de liaison montante, et des symboles de liaison montante dans une période sont attribués.

4. Procédé de fonctionnement selon la revendication 3, dans lequel les informations de motif de commutation de TDD sont déterminées sur la base d'une période d'un motif de liaison descendante-liaison montante, du nombre des créneaux de liaison descendante, du nombre des symboles de liaison descendante consécutifs à partir du dernier créneau de liaison descendante, du nombre des créneaux de liaison montante consécutifs à partir de la fin du motif de liaison descendante-liaison montante, et du nombre des symboles de liaison montante consécutifs à partir du premier créneau de liaison montante.

5. Procédé de fonctionnement selon la revendication 1, dans lequel la génération du signal de commutation de TDD consiste à :
générer le signal de commutation de TDD par compensation d'une valeur de délai de temps prédéfinie pour les informations relatives au point de départ de trame du premier signal de communication reçu,
dans lequel la valeur de délai de temps prédéfinie est une valeur obtenue par mesure d'une valeur de délai générée dans le répétiteur.

6. Procédé de fonctionnement selon la revendication 1, consistant en outre à :
déterminer si une erreur s'est produite ou non dans la réception du premier signal de communication.

7. Procédé de fonctionnement selon la revendication 6, dans lequel la génération du signal de commutation de TDD consiste à :
conserver le signal de commutation de TDD en tant que signal de commutation de TDD existant lorsqu'une erreur s'est produite dans la réception du premier signal de communication.

8. Répétiteur (400) comprenant :
un générateur de signal de commutation (300) conçu pour recevoir un premier signal de communication conformément à une première norme de communication mobile ; obtenir des informations relatives à un point de départ de trame du premier signal de communication reçu à partir du premier signal de communication reçu, et générer un signal de commutation de duplexage par répartition dans le temps, TDD, sur la base des informations relatives au point de départ de trame du premier signal de communication reçu ; et
un circuit de commutation (410) conçu pour commander la commutation de liaison montante et la liaison descendante du répétiteur qui relaie un second signal de communication conformément à une seconde norme de communication mobile sur la base du signal de commutation de TDD généré,
dans lequel la première norme de communication mobile est une norme LTE ou une norme LTE-A, et la seconde norme de communication mobile est une norme 5G.
